(19) **Europäisches Patentamt / European Patent Office / Office européen des brevets**

(11) **EP 1 998 638 B1**

(12) **EUROPEAN PATENT SPECIFICATION**

(45) Date of publication and mention of the grant of the patent:
**30.05.2012 Bulletin 2012/22**

(51) Int Cl.:
**A23L 2/66** (2006.01)    **A23J 1/20** (2006.01)
**A23L 1/40** (2006.01)    **A23C 21/00** (2006.01)

(21) Application number: **07727379.5**

(22) Date of filing: **27.03.2007**

(86) International application number:
**PCT/EP2007/052906**

(87) International publication number:
**WO 2007/110423 (04.10.2007 Gazette 2007/40)**

(54) **IN SITU PREPARATION OF WHEY PROTEIN MICELLES**

IN-SITU-HERSTELLUNG VON MOLKEPROTEINMIZELLEN

ÉLABORATION IN SITU DE MICELLES DE PROTÉINES DE LACTOSÉRUM

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **27.03.2006 EP 06006296**

(43) Date of publication of application:
**10.12.2008 Bulletin 2008/50**

(73) Proprietor: **Nestec S.A.**
**1800 Vevey (CH)**

(72) Inventors:
• **BOVETTO, Lionel, Jean, René**
  **F-74500 Larringes (FR)**
• **SCHMITT, Christophe, Joseph, Etienne**
  **CH-1092 Belmont S/Lausanne (CH)**

(74) Representative: **Rupp, Christian**
**Mitscherlich & Partner**
**Patent- und Rechtsanwälte**
**Sonnenstraße 33**
**80331 München (DE)**

(56) References cited:
EP-A1- 0 885 566    WO-A-96/34535
WO-A2-2006/034857    US-A- 4 110 476
US-A- 4 309 417    US-A- 5 882 705
US-A- 5 902 630    US-A- 6 036 984
US-A1- 2002 039 617    US-B1- 6 767 575

• DE LA FUENTE M A ET AL: "Recent advances in the characterisation of heat-induced aggregates and intermediates of whey proteins" TRENDS IN FOOD SCIENCE AND TECHNOLOGY, ELSEVIER SCIENCE PUBLISHERS, GB, vol. 13, no. 8, August 2002 (2002-08), pages 262-274, XP004395896 ISSN: 0924-2244

## Description

### Field of the invention

The present invention relates to a method for forming whey protein micelles containing compositions, in situ.

### Background

Protein constitutes an indispensable part of the diets of many people. It is not only used for its nutritional value but also imparts desirable texture and stabilisation to foods. For instance, in fat-containing products, the fat must remain stabilized over the entire shelf life of the product, so that no phase separation occurs.

To this end, emulsifying agents are utilized, that provide a stabilization of the emulsion once formed, based on their inherent property of a lipophilic or hydrophobic part being soluble in the non-aqueous phase and a polar or hydrophilic part being soluble in water such that said molecules facilitate emulsifying one phase in the other phase. Additionally, the emulsifying agents also protect the once formed droplets from aggregation and coalescence. As emulsifying agents naturally occurring substances are used, such as hydrocolloids, phospholipids (lecithin) or glycolipids and on the other hand synthetic agents like stearyl-2-lactylate or mono-, diacylglycerides, etc. may also be used.

One of the major drawbacks of the agents resides in that they sometimes substantially add to the costs of the final product, and do not add to the nutritional value of the product. Sometimes, such kinds of materials also do not show adequate stabilising properties because of an interfacial competition with proteins.

Increasingly, therefore, protein is also being used as an emulsifier and as a partial substitute for fat.

US 6767575 B1 discloses a preparation of an aggregate whey protein product, whereby whey protein is denatured by acidification and heating. The protein aggregates thus obtained are used in food application.

GB 1079604 describes improvements in the manufacture of cheese, whereby whey proteins undergo heat treatment at an optimum pH value, in order to obtain insoluble whey proteins which are then added to raw milk.

WO 93/07761 is concerned with the provision of a dry microparticulated protein product which can be used as a fat substitute.

US 5750183 discloses a process for producing proteinaceous microparticles which are useful as fat substitute containing no fat.

A proteinaceous fat substitute is also disclosed in WO 91/17665 whereby the proteins are in the form of a water-dispersible microparticulated denatured whey protein.

Apart from the food applications, proteins are also present in many pharmaceutical and cosmetic compositions.

One of the problems encountered with the production of products containing globular proteins in general, and whey protein in particular, however is their limited processability. Indeed, protein molecules when heated, or when subjected to acidic or alkaline environment or in the presence of salts tend to lose their native structure and reassemble in various random structures such as gels, for example.

The preparation of gelled aqueous compositions of whey proteins is the subject of EP 1281322.

Elofsson et al. in International Dairy Journal, 1997, p.601-608 describe cold gelling of whey protein concentrates.

Similarly, Kilara et al. in Journal of Agriculture and Food 20 Chemistry, 1998, p.1830-1835 describes the effect of pH on the aggregation of whey proteins and their gelation.

This gel effect presents limitation in terms of not only processability (e.g. clogging of machines used in the manufacture of protein-containing products) but also in terms of the texture thus obtained, which may not be desirable for the wide range of protein applications.

Controlled denaturation of proteins is thus desirable in order to widen the use of proteins.

In the Proceedings of the Second International Whey Conference, Chicago, October 1997, reported in International Dairy Federation, 1998, 189-196, Britten M. discusses heat treatments to improve functional properties of whey proteins. A process for producing whey protein micro-particle dispersion at 95°C is described.

Erdman in Journal of American College of Nutrition, 1990, p.398-409 describes that the quality of microparticulated protein is not affected despite using high shear and heat.

EP 0603981 also describes a heat stable oil-in-water emulsion containing proteins.

Sato et al. in US 5,882,705 obtained micellar whey protein by heat treating a hydrolysed whey protein solution. The micellar whey protein are characterised by an irregular shape.

Thus, an object of the invention is to improve the usability and applicability of proteins in heating processes.

### Summary of the invention

Accordingly, this object is achieved by means of the features of the independent claims. The dependent claims develop further the central idea of the present invention.

To achieve this object, a method according to claim 1 is provided for preparing a hot beverage or liquid comestible, the method comprising the following steps of providing a beverage or liquid comestible package comprising native whey protein and heating said package in order to prepare a heated ready-to-eat beverage or liquid comestible and at the same time transforming the native whey protein at least partially into whey protein micelles wherein the content of the package is in the form of a powder to which water is added prior to the heating step or is in the form of liquid, wherein the heating is carried out during between 0.3 and 3s per ml of product, and wherein the solution is heated to a temperature between 80°C and 100°C.

The disclosure also shows an instant food package comprising whey protein and beverage or liquid comestible ingredients and a food or drink composition thus obtained.

## Figures

The present invention is further described hereinafter with reference to some preferred embodiments shown in the accompanying figures in which:

Fig.      1 shows the result of an experiment demonstrating the effect of pH and heat treatment on the micellisation of β-lactoglobulin.

Fig.      2 is showing a mean to determine the pH of micellisation for a commercial preparation (Bipro®, Batch JE032-1-420) using turbidity measurements at 500 nm.

Fig. 3      is a Transmission Electron Microscopy micrograph from whey protein micelles (2 wt.%, WPI 95, Lactalis) at pH 7.4. Scale bar is 200 nm.

Fig.      4 shows the result of an experiment evaluating the impact of the ionic strength (Arginine HCl) on the formation of protein micelles at constant pH of 7.0.

Fig. 5      shows the volume stability (FVS) of foam stabilized by 1 wt.% % β-lactoglobulin micelles (Davisco) at pH 7.0 in presence of 60 mM Arginine HCl compared to non-micellised β-lactoglobulin.

Fig. 6      shows the intensity-based equivalent hydrodynamic diameter of whey protein obtained by heat-treatment of a 1wt% β-lactoglobulin dispersion for 15 min at 85°C at pH ranging from 2 to 8. Whey protein micelles are obtained at pH 4.25 (positively charged with a zeta potential around +25mV) and at pH 6.0 (negatively charged with a zeta potential around -30mV). Z-averaged hydrodynamic diameter of the micelles was 229.3 nm at pH 4.25 and 227.2 nm at pH 6.0. The corresponding micrographs of the micelles obtained by TEM after negative staining are shown. Scale bars are 1 μm.

Fig. 7      shows a highly schematic structure of a whey protein micelle.

Fig. 8      is a negative staining TEM micrograph of a whey protein micelles dispersion obtained at 4% protein content.

Fig. 9      is a negative staining TEM micrograph of a whey protein micelle dispersion obtained at 20% protein content after microfiltration.

Fig. 10      shows the heat stability of a whey protein micelle dispersion obtained at 10% protein content after microfiltration at pH 7.0 in presence of NaCl after heating at 85°C for 15 min.

Fig. 11      shows the heat stability of a whey protein dispersion obtained at 4% protein content at pH 7.0 in presence of NaCl after heating at 85°C for 15 min.

Fig. 12      is a graph showing the size distribution of micelles obtained by the process of the invention using a 4% Prolacta 90 whey protein isolate treated at pH 5.9.

## Detailed description of the invention

According to the present invention, a method according to claim 1 for preparing a hot beverage or liquid comestible is provided, whereby the native whey proteins present in a package prior to heating are transformed at least partially into whey protein micelles.

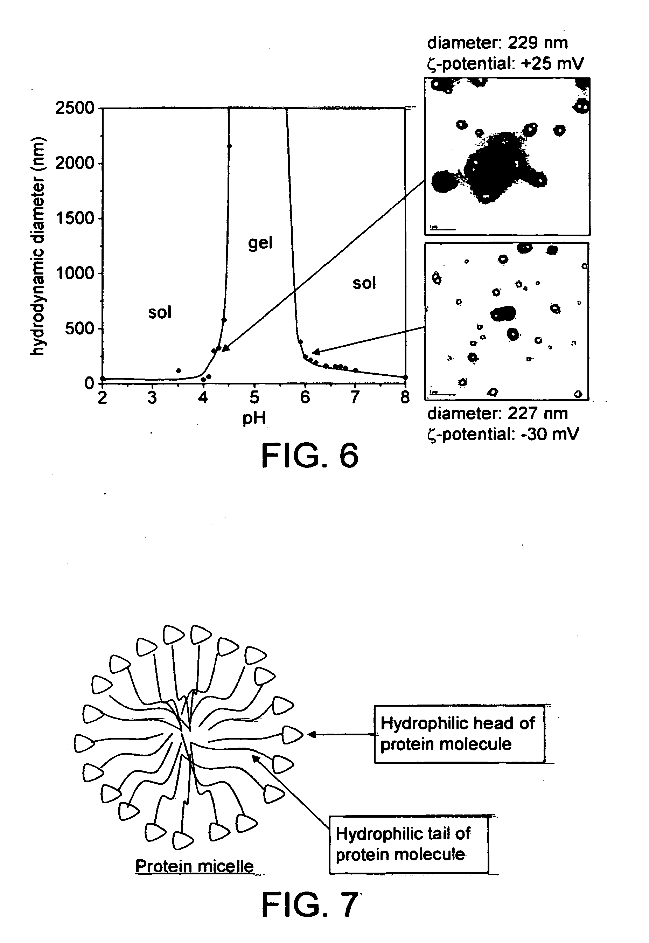

Figure 7 is a schematic representation of the micelles obtained by the method of the present invention, wherein the whey proteins are arranged in such a way that the hydrophilic parts of the proteins are oriented towards the outer part of the agglomerate and the hydrophobic parts of the proteins are oriented towards the inner "core" of the micelle. This energetically favourable configuration offers good stability to these structures in a hydrophilic environment.

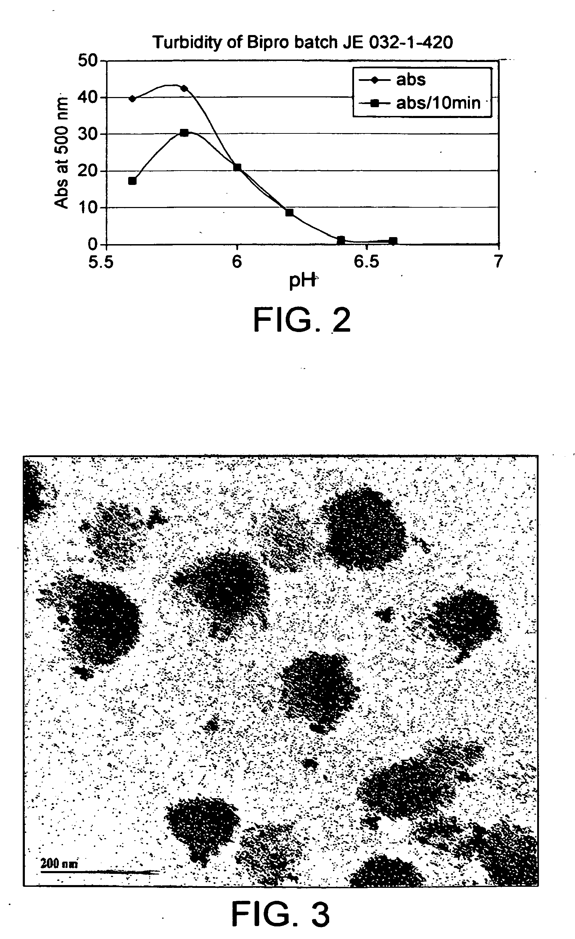

The specific micelle structure can be seen from the figures, in particular figures 3, 8, 9, wherein the micelles consist essentially of spherical agglomerates of denatured whey protein. The micelles prepared according to the present invention are particularly characterised by their regular, spherical shape.

Due to their dual character (hydrophilic and hydrophobic), this denatured state of the protein seems to allow interaction with a hydrophobic phase, e.g. a fat droplet or air, and a hydrophilic phase. The whey protein micelles obtained herein therefore have perfect emulsifying and foaming properties.

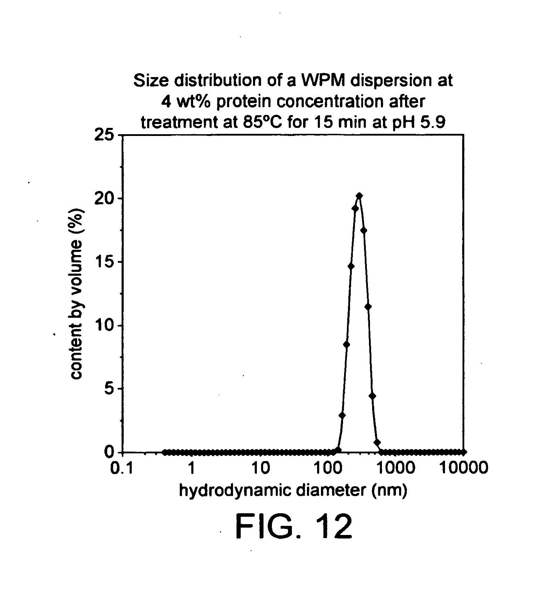

Furthermore, the micelles produced by the method of the present invention have an extremely sharp size distribution (see Fig. 12), such that more than 80% of the micelles produced will have a size smaller than 1 micron, preferably between 100nm and 900nm, more preferably between 100-770nm, most preferably between 200 and 400nm.

The mean diameter of the micelles can be determined using Transmission Electron Microscopy (TEM). In order to do so, the liquid micelle samples are encapsulated in agar gel tubes. Fixation is achieved by immersion in a solution of 2.5% glutaraldehyde in 0.1M, pH 7.4 cacodylate buffer and post-fixation with 2% Osmium tetroxide in the same buffer, both solutions containing 0.04% Ruthenium red. After dehydration in a graded ethanol series (70, 80, 90, 96, 100% ethanol), the samples are embedded in Spurr resin (Spurr/ethanol 1:1, 2:1, 100%). After polymerization of the resin (70°C, 48 hours), semi-thin and ultra-thin sections are cut with a Leica ultracut UCT ultra-microtome. Ultra-thin sections, stained with aqueous uranyl-acetate and lead citrate, are then examined by transmission electron microscopy (Philips CM12, 80 kV).

Without wishing to be bound by theory, it is thought that during micelle formation according to the process of the invention, the micelle reach a "maximum" size, due to the overall electrostatic charge of the micelle repelling any additional protein molecule, such that the micelle cannot grow in size any longer. This accounts for the narrow size distribution observed (cf. Fig. 12).

The micelles described above are formed in situ according to the method of the present invention and are present in the food or drink composition obtainable thereby.

The first step in the method of the present invention is to provide a beverage or liquid comestible package comprising native whey protein.

As the whey protein to be used in the present method, any commercially available whey protein isolates or concentrates may be used, i.e. whey protein obtained by any process for the preparation of whey protein known in the art, as well as whey protein fractions prepared therefrom or proteins such as β-lactoglobulin (BLG), α-lactalbumin and serum albumin. In particular, sweet whey obtained as a by-product in cheese manufacture, acid whey obtained as by-product in acid casein manufacture, native whey obtained by milk microfiltration or rennet whey obtained as by-product in rennet casein manufacture may be used as the whey protein. The whey protein may be from a single source or from mixtures of any sources. It is preferable that the whey protein does not undergo any hydrolysis step prior to micelle formation. Thus, the whey protein is not subjected to any enzymatic treatment prior to micellisation. According to the invention, it is important that the whey protein be used in the micelle formation process and not hydrolysates thereof.

The present invention is not restricted to whey isolates from bovine origin, but pertains to whey isolates from all mammalian animal species, such as from sheep, goats, horses, and camels. Also, the process according to the present invention applies to mineralised, demineralised or slightly mineralised whey preparations. By "slightly mineralized" is meant any whey preparation after elimination of free minerals which are dialyzable or diafiltrable, but which maintains minerals associated to it by natural mineralisation after preparation of the whey protein concentrate or isolate, for example. These "slightly mineralised" whey preparations have had no specific mineral enrichment.

Whey proteins are an excellent source of essential amino acids (AA) (45%). Compared to casein (containing 0.3g cysteine/100g protein), sweet whey proteins contain 7 times more cysteine, and acid whey 10 times more cysteine. Cysteine is the rate limiting amino acid for glutathione (GSH) synthesis, a tripeptide made of glutamate cysteine and glycine which has primary important functions in the defence of the body in case of stress. Requirements in these amino acids may be increased in case of stress and in elderly people. Also, glutathione oral supplementation with whey protein has been shown to increase plasma GSH levels of HIV-infected patients (Eur. J. Clin. Invest. 2001; 31, 171-178).

Other health benefits provided by whey proteins include enhancement of muscle development and building, as well as muscle maintenance in children, adults or elderly people, enhancement of the immune function, improvement of cognitive function, control of blood glucose such that they are suitable for diabetics, weight management and satiety, anti-inflammatory effects, wound healing and skin repair, lowering of the blood pressure, etc.

Whey proteins have a better protein efficiency ratio (PER = 118) compared for example to casein (PER = 100). PER is a measure of a protein quality assessed by determining how well such protein supports weight gain. It can be calculated by the following formula:

```
PER = body weight growth (g) / protein weight intake (g).
```

| Examples: | PER | % Casein |
|---|---|---|
| casein | 3.2 | 100 |
| Egg | 3.8 | 118 |
| Whey | 3.8 | 118 |
| Whole Soya | 2.5 | 78 |
| Wheat gluten | 0.3 | 9 |

For the process of the invention, native whey proteins are provided in a package. The contents of the package may be in the form of dry ingredients to be diluted or in a liquid form.

When provided in the form of dry ingredients, the content of the package is an essentially dry powder. Said powder comprises native whey protein in an amount of at least 4%, preferably no more than 6%. Additionally, the powder may comprise further food ingredients in powder form, such as dehydrated culinary, salts, dry soluble coffee granules, tea extracts, plant extracts, sugars etc.

Prior to heating, the dry package contents are diluted such that when in solution the whey proteins are present in an amount of 0.1 wt.% % to 12 wt.%, preferably in an amount of 0.1 wt.% to 8 wt.%, more preferably in an amount of 0.2 wt.% to 7 wt.%, even more preferably in an amount of 0.5 wt.% to 6 wt.%, most preferably in an amount of 1 wt.% to 4 wt.% on the basis of the total weight of the solution.

The powder is preferably diluted with water.

When the contents of the package are provided in a liquid form, the liquid comprises native whey protein in an amount of 0.1 wt.% to 12 wt.%, preferably in an amount of 0.1 wt.% to 8 wt.%, more preferably in an amount of 0.2 wt.% to 7 wt.%, even more preferably in an amount of 0.5 wt.% to 6 wt.%, most preferably in an amount of 1 wt.% to 4 wt.% on the basis of the total weight of the solution.

The aqueous solution of the whey protein preparation as present before the heating step may also comprise additional compounds, which may stem from the powder ingredients or from the solution itself. Such additional compounds are for example by-products of the respective whey production processes, other proteins, gums or carbohydrates.

The package may comprise other food ingredients such as soup ingredients, sauce ingredients, cocoa ingredients, tea ingredients, plant extracts, sweet dessert ingredients, fats, salts, emulsifiers, sugars, maltodextrins, polysaccharides such as acacia gum or carrageenan, cereals, soluble fibres etc. It may comprise aromas such as vanilla, caramel, fruit, chocolate, coffee, cinnamon aroma etc. It may also comprise further functional ingredients such as sweeteners, caffeine, vitamins, minerals, drugs, ligands, bioactive agents, etc.

The whey protein, as well as the fractions and/or the main proteins thereof may be used in purified form or likewise in form of a crude product. According to a preferred embodiment, the content of divalent cations in the whey protein for the preparation of the beverage or liquid comestible may be less than 2.5%, more preferably less than 2%, even more preferably less than 0.2%. Most preferably the whey proteins are completely demineralised.

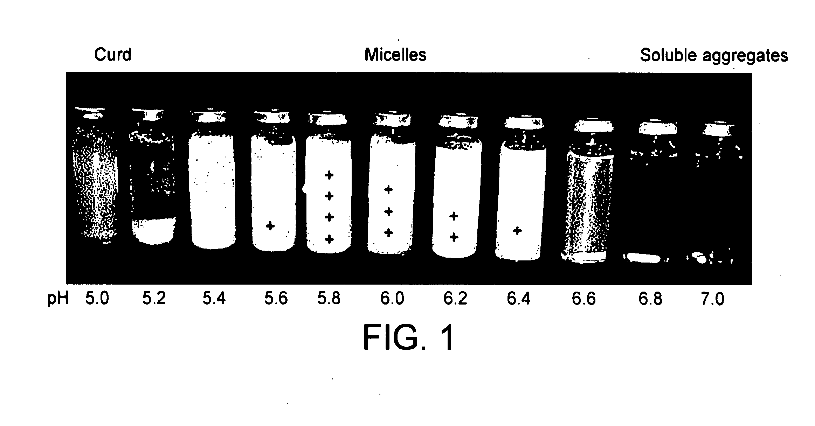

According to the present finding, the pH and the ionic strength of the aqueous native whey protein solution are important factors in the present method. Thus, for extensively dialyzed samples of native whey proteins which are virtually devoid or depleted of free cations such as Ca, K, Na, Mg, it has been found that when performing the heat treatment during a time period of 10s to up to 2 hours at a pH below 5.4, curd is obtained, while at a pH exceeding 6.8, soluble whey protein results (see Figure 1). Thus, only in this rather narrow pH window will whey proteins micelles having a diameter of less than 1 $\mu$m be obtained. These micelles will have an overall negative charge. The same micelle form can also be obtained symmetrically below the isoelectrical pH, i.e from 3.5 to 5.0, more preferably 3.8 to 4.5, resulting in micelles being positively charged (see Figure 6).

Thus, in order to obtain positively charged micelles, micellisation of whey proteins may be done in a salt free solution at a pH value adjusted between 3.8 and 4.5 depending on the mineral content of the protein source.

The micelles obtained by the method of the present invention preferably have an overall negative charge. Thus, in a preferred embodiment, the pH of the aqueous solution prior to heating may be in a range of from 5 to 9.

More specifically, to obtain negatively charged micelles, the pH may be in the range of from 5.6 to 6.4, more preferably from 5.8 to 6.0 for a low divalent cation content (e.g. less than 0.2% of the initial whey protein powder). The pH is increased up to 8.4 depending on the mineral content of whey protein source (concentrate or isolate). In particular, the pH may be between 7.5 to 8.4, preferably 7.6 to 8.0 to obtain negatively charged micelles in the presence of large amounts of free minerals and the pH may be between 6.4 to 7.4, preferably 6.6 to 7.2 to obtain negatively charged micelles in the presence of moderate amounts of free minerals. As a general rule, the higher the calcium and/or magnesium content of the initial whey protein powder, the higher the pH of micellisation.

In order to standardize the conditions of formation of the whey protein micelles, it is most preferable to demineralise by any of the known demineralisation techniques (dialysis, ultrafiltration, reverse osmosis, ion exchange chromatography...), any source of liquid native whey proteins with a protein concentration ranging from that of sweet whey, microfiltration permeate of milk or acid whey (0.9% protein content) to that of a concentrate at 30% protein content. The dialysis can be done against water (distilled, deionised or soft), but as this will only allow removal of the ions weakly bound to the whey proteins, it is more preferable to dialyse against an acid at pH below 4.0 (organic or inorganic) to better control the ionic composition of the whey proteins. By doing so, the pH of whey protein micelle formation is below pH 7.0, more preferably comprised between 5.8 to 6.6.

When the contents of the package are in liquid form, the pH is generally adjusted by the addition of acid, which is preferably food grade, such as e.g. hydrochloric acid, phosphoric acid, acetic acid, citric acid, gluconic acid or lactic acid. If the mineral content is high, the pH is generally adjusted by the addition of alkaline solution, which is preferably food grade, such as sodium hydroxide, potassium hydroxide or ammonium hydroxide. In any case, the pH of the liquid is between 5 and 9, preferably between 5 and 8.

When the contents of the package are in a dry form, the dry ingredients are selected such that when diluted with water, the pH of the solution prior to heating is between 5 and 9, preferably between 5 and 8.

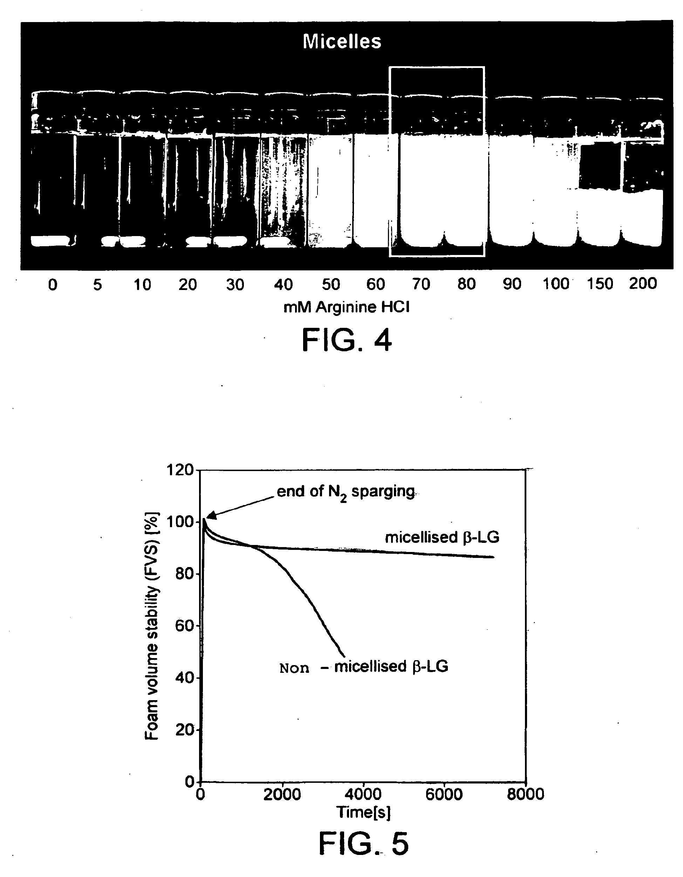

Alternatively, if no pH adjustment step is desired, it is possible to adjust the ionic strength of the whey protein preparation while keeping the pH constant. Then, ionic strength may be adjusted by organic or inorganic ions in such a way that allows micellisation at a constant pH value of 7. Figure 4 shows that micelles may be formed at a constant pH value of 7.0 while the ionic strength is varied by the addition of 70-80 mM of arginine HCl.

A buffer may be further added to the aqueous solution of whey protein or to the dry powder so as to avoid a substantial change of the pH value during heat treatment of the whey protein. In principle, the buffer may be selected from any food-grade buffer system, i.e. acetic acid and its salts, such as e.g. sodium acetate or potassium acetate, phosphoric acid and salts thereof, e.g. $NaH_2PO_4$, $Na_2HPO_4$, $KH_2PO_4$, $K_2HPO_4$, or citric acid and salts thereof etc.

Adjusting the pH and/or the ionic strength of the aqueous solution results in a controlled process yielding micelles having a size between 100nm-900nm, preferably between 100-700nm, most preferably between 200-400nm. Preferably, the distribution of micelles having dimensions between 100-700nm is greater than 80% when carrying out the process of the invention (see Figure 12).

In order to obtain regular shape micelles, it is also important, according to the invention, that the whey protein does not undergo any hydrolysation step prior to micelle formation.

In a second step of the process of the present invention, the preparation comprising native whey protein is then subjected to the heat treatment. When the package of the present invention is in the form of a powder, water is generally added prior to the heating step. In this respect it has been found that for obtaining whey protein micelles, it is important to have the temperature in the range of from between 80°C and 100°C, e.g., preferably of from about 82 to about 89 °C, more preferably of from about 84 to about 87 °C, most preferred at about 85 °C.

Heating is carried out during between 0.3s and 3s per ml of product.

Once the desired temperature has been reached, it is kept at this temperature for a minimum of 10 seconds and a maximum of 2 hours. Preferably, the time period during which the aqueous whey protein solution is kept at the desired temperature ranges from 12 to 25 minutes, more preferably from 12 to 20 minutes, or most preferably about 15 minutes.

The heat treatment may also be achieved in a microwave oven or any similar equipment allowing heating by microwaves with a time/quantity ratio of between 0.8s per mL and 1.2s per mL of solution. This will depend on the initial temperature of the solution prior to heating and to the power of the microwave oven. For instance, a 4 wt% protein solution heated in a 1500 W apparatus up to boiling temperature (98°C at an altitude of 833m) requires approximately 1s per mL of solution.

Heating the content of the package according to the present invention allows the preparation of a ready-to-eat beverage or liquid comestible while at the same time transforming the native whey protein at least partially into whey protein micelles. The solution is heated to a temperature between 80°C and 100°C, preferably 70 to below 95°C.

As shown in Figure 2, turbidity measurements are an indication of micelle formation. According to the present invention, the turbidity measured by absorbance at 500nm is at least 3 absorbance units for 1% protein solution but can reach 16 absorbance units when the yield of micellisation is above 80% (see Figure 2). As a result of the present invention, the heated solution will have a milky appearance due to the presence of whey protein micelles.

To further illustrate the effect of micelle formation from a physicochemical point of view, a 1 wt% dispersion of Bipro® has been heated for 15 minutes at 85°C at pH 6.0 and 6.8 in MilliQ water. The hydrodynamic diameter of the aggregates obtained after heat treatment was measured by dynamic light scattering. The apparent molecular weight of the aggregates was determined by static light scattering using the so-called Debye plot. The surface hydrophobicity was probed using the hydrophobic ANS probe and the free accessible thiol groups by the DTNB method using cystein as the standard amino acid. Finally, the morphology of the aggregates was studied by negative staining TEM. The results are presented in table 1.

**Table 1: Physicochemical properties of soluble whey protein aggregates obtained by heat treatment (85°C, 15 min) of a 1 wt% protein dispersion in presence or absence of NaCl.**

| pH | hydrodyna micdiameter (nm) | molecular weight $M_w$ (x $10^6$ g.mol$^{-1}$) | morphology | $\zeta$-potential (mV) | protein surface hydropho bicity ($\mu$g.mmol$^{-1}$ ANS) | accessib 1e SH groups (nmol SH.mg$^{-1}$ prot.) |
|---|---|---|---|---|---|---|
| 6.0 | 120.3±9.1 | 27.02±8.09 | Spherical micelles | -31.8±0.8 | 105.4 | 3.5±0.4 |
| 6.8 | 56.2±4.6 | 0.64±0.01 | linear aggregates | -27.9±1.2 | 200.8 | 6.8±0.5 |

From table 1, it is clear that the whey protein micelles that were formed at pH 6.0 allow protein to decrease its specific ANS surface hydrophobicity by a factor of 2 compared to non-micellised whey protein heated in the same condition, but at pH 6.8. The micelle formation can be also seen on the very high molecular weight of 27 x $10^6$ g.mol$^{-1}$ compared to 0.64 X $10^6$ g.mol$^{-1}$ for non-micellised protein, indicating a very condensed state of the matter within the micelle (low amount of water). Interestingly enough, the $\zeta$-potential of the micelles is even more negative than the non-micellised proteins even if the latter have been formed at a more basic pH than the micelles. This is the result of a more hydrophilic surface of the micelles being exposed to the solvent. Finally, one should note that the thiol reactivity of the micelles is much lower than that of the non-micellised protein because of the different pH of heat treatment.

It has been found that the conversion yield of native whey protein to micelles decreases when the initial protein concentration of native whey protein is high. For example, when starting with a whey protein isolate Prolacta 90 (lot 673 from Lactalis), the yield of formation of whey protein micelles drops from 85% (when starting with 4% proteins) to 50% (when starting with 12% of proteins). In order to maximize the formation of whey protein micelles (>85% of the initial protein content), it is better to start with an aqueous whey protein solution having a protein concentration below 12%, preferably below 4%. Depending on the intended final applications, the protein concentration is adjusted before heat treatment to manage the optimal whey protein micelles yield.

According to the present method, native whey protein are converted to whey protein micelles during the heating step. The yield of conversion of native whey protein into micelles is of at least 20%, preferably at least 50%, more preferably at least 80%, and the residual soluble aggregates or soluble protein content is preferably below 20%. The whey proteins micelles obtained according to the present method have an average diameter of less than 1$\mu$m, preferably of from 100 to 900 nm, more preferably from 100 to 700 nm, most preferably from 200-400nm.

The average micelle size is characterised by a polydispersity index below 0.200.

An advantage of the method of the present invention is that the whey protein micelles prepared accordingly have not been submitted to any mechanical stress leading to reduction of the particle size during formation. This method induces spontaneous micellisation of whey proteins during heat treatment in the absence of shearing.

The whey protein micelles have shown to be ideally suited for use as a whitening agent, an emulsifier, a fat substitute, a substitute for micellar casein or a foaming agent, since they are able to stabilize fat and/or air in an aqueous system for prolonged period.

They have been shown to be stabilisers in milky foam matrices for instance. The foam stability is shown in Figure 5 which compares the use of non-micellised whey protein versus the micellised whey protein of the present invention.

Thus, whey protein micelles may be used as an emulsifying agent, for which the material is ideally suited, since it has a neutral taste and no off-flavour is created by the use of such material. They may also be used as micellar casein substitute.

In addition, the present whey protein micelles may serve as a whitening agent, so that with one compound several tasks may be fulfilled. Since whey is a material abundantly available, the use thereof reduces the cost of a product requiring an emulsifying, filling, whitening or foaming agent, while at the same time adding to its nutritional value. Indeed, the micelles obtained by the present invention have a Protein Efficiency Ratio equivalent to the starting whey protein of at least 100, preferably at least 110, which makes them important nutritional ingredients.

A package used in step 1 of the method according to the present invention may thus comprise coffee ingredients and whey protein, such that upon heating the whey protein micelles act as a whitening agent. The coffee ingredients in the package may be in a dry, soluble state.

Due to their neutral taste, their whitening power and their stability after heat treatment, the present whey proteins micelles may be used to increase skimmed milk whiteness and mouthfeel.

As well as increasing the whitening power of dairy systems for the same total protein content, the fat content in a food matrix may be reduced. This feature represents a particular advantage of the present whey protein micelles, since it allows e.g. adding a milk creamer without adding additional fat derived from the milk as such.

Accordingly, the method of the present invention can be used for the preparation of any kind of ready-to-eat beverage or liquid comestible product requiring stabilisation of an emulsion or a foam, such as e.g. cappuccino instant beverages, coffee creamers, or also in low fat or essentially fat free dairy products, or also where whey protein micelles find application as a micellar casein substitute. By "liquid comestible" is meant any food product in a liquid or semi-liquid form which can be consumed by a human or an animal.

Thus, the package used in step 1 of the method of the present invention may comprise ingredients selected from coffee, soup ingredients, sauce ingredients, cocoa ingredients, tea ingredients, plant extract ingredients, sweet dessert ingredients etc.

Examples for products, where the present whey protein micelles may find application are for example food products such as soups, dairy products, pasteurized UHT milk, sweet condensed milk, frappés, fermented milks, milk-based fermented products, milk chocolate, white chocolate, dark chocolate, hot chocolate, sauces, dessert products, cappuccino coffee, coffee creamer, foams, emulsions, fermented cereal based products, infant formula, pet food, liquid oral supplements etc.

Furthermore, the present inventive method provides for an instant food package comprising native whey protein and further beverage or liquid comestible ingredients. By heating the contents of the package, the whey protein micelles are obtained in situ in an easy step. Thus, all the benefits associated with whey protein micelles (e.g. emulsifier, whitener, stabilizer, nutritional agent etc.) are obtained without the need to use elaborate techniques for forming whey protein micelles. Furthermore, the cost advantage in using native whey protein instead of expensive emulsifiers, stabilizers etc. is tremendous. Thus, nutritionally balanced, appealing hot beverages or liquid consumables are easily obtained.

In a further aspect, the ready-to-eat beverage or liquid comestible produced may be cooled prior to consumption. Alternatively, it may further be used as an ingredient in the manufacture of other consumables, such as dairy products, mayonnaise, salad dressing, pasteurized UHT milk, sweet condensed milk, yoghurt, fermented milks, milk-based fermented products, milk chocolate, white chocolate, dark chocolate, mousses, foams, emulsions, ice creams, fermented cereal based products, milk based powders, infant formula, diet fortifications, pet food, tablets, liquid bacterial suspensions, dried oral supplement, liquid oral supplement etc.

Indeed, due to their stability, the micelles produced during the heat treatment will conserve their characteristics and functions regardless of any cooling or further processing.

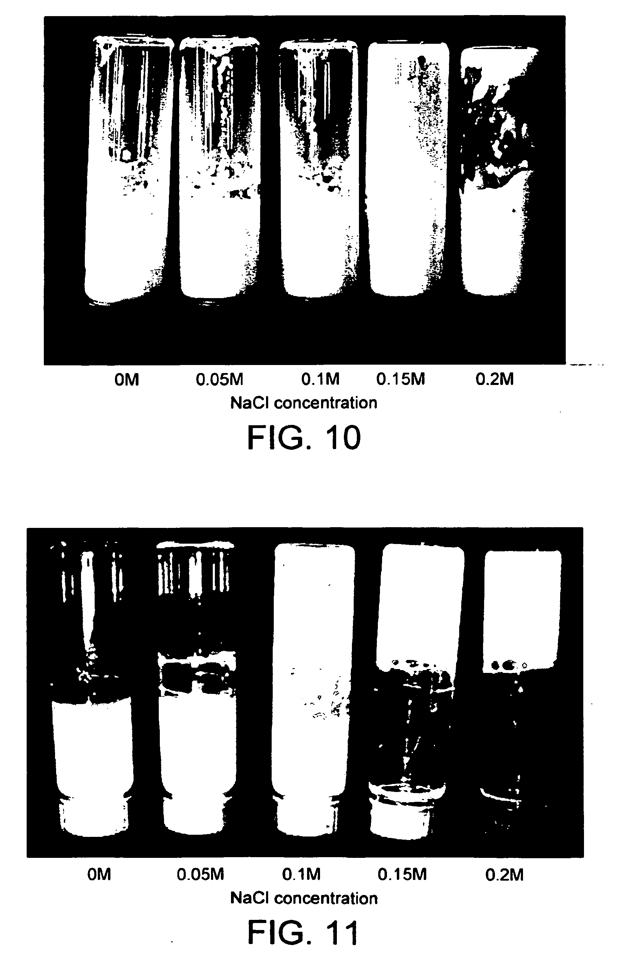

Figures 10 and 11 compare the heat stability of whey protein micelles with native whey protein, whereby the whey protein micelles are noticeably more resistant to heating.

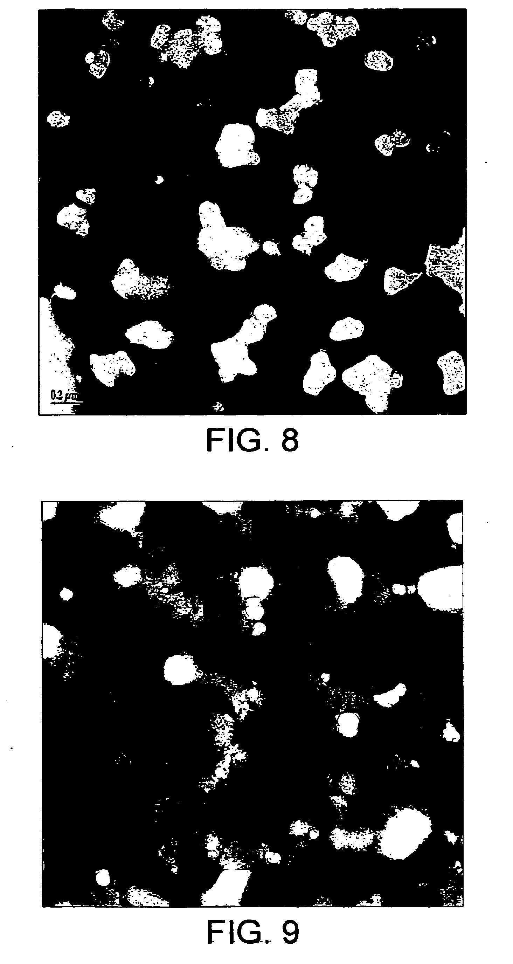

Furthermore, it has been shown that the basic micelle structure of the whey proteins is conserved, despite further processing such as concentration, spray-drying, freeze-drying, roller drying etc. Indeed powders obtained from whey protein micelle concentrate can be easily redispersed in water at room temperature or at 50°C. The size and structure of the whey protein micelles are fully conserved compared to the initial concentrate. For example, a whey protein micelle concentrate that was spray-dried at 20% protein concentration has been redispersed in deionised water at 50°C at a protein concentration of 50%. The structure of the micelles has been probed by TEM and can be compared to Figure 9. A similar shape of micelles was obtained. The diameter of the micelles was found to be 315 nm by dynamic light scattering with a polydispersity index of 0.2.

The following examples illustrate the present invention without limiting it thereto.

**Examples**

The invention is further defined by reference to the following examples describing in detail the preparation of the micelles of the present invention. The invention described and claimed herein is not to be limited in scope by the specific embodiments herein disclosed, since these embodiments are intended as illustrations of several aspects.

**Example 1: Micellisation of β-Lactoglobulin**

β-Lactoglobulin (lot JE002-8-922, 13-12-2000) was obtained from Davisco (Le Sueur, MN, USA). The protein was purified from sweet whey by ultra-filtration and ion exchange chromatography. The composition of the powder is 89.7 % protein, 8.85 % moisture, 1.36% ash (0.079 % $Ca^{2+}$, 0.013 % $Mg^{2+}$, 0.097 % $K^+$, 0.576 % $Na^+$, 0.050 % $Cl^-$) . All other reagents used were of analytical grade (Merck Darmstadt, Germany).

The protein solution was prepared at 0.2% concentration by solvation of β-lactoglobulin in MilliQ® water (Millipore), and stirring at 20 °C for 2 h. Then pH of aliquots was adjusted to 5.0, 5.2, 5.4, 5.6, 5.8, 6.0, 6.2, 6.4, 6.6, 6.8, 7.0 by HCl addition. The solutions were filled in 20 ml glass vials (Agilent Technologies) and sealed with aluminum capsules containing a silicon/PTFE sealing. The solutions were heated at 85 °C for 15 min (time to reach the temperature 2.30 - 3.00 min). After the heat treatment, the samples were cooled in ice water to 20 °C.

The visual aspect of products (Figure 1) indicates that the optimal pH of micellisation is 5.8.

## Example 2: Micellisation of whey protein isolate

Whey protein isolate (WPI) (Bipro®, Batch JE032-1-420) was obtained from Davisco (Le Sueur, MN, USA). The composition of the powder is reported in table 2.

The protein solution was prepared at 3.4% protein by solvation of whey protein powder in MilliQ® water (Millipore), and stirring at 20 °C for 2 h. The initial pH was 7.2. Then pH of aliquots was adjusted at 5.6, 5.8, 6.0, 6.2, 6.4 and 6.6 by HCl 0.1N addition.

The solutions were filled in 20 ml glass vials (Agilent Technologies) and sealed with aluminum capsules containing a silicon/PTFE sealing. The solutions were heated at 85 °C for 15 min (time to reach the temperature 2.30 - 2.50 min). After the heat treatment, samples were cooled in ice water to 20 °C.

The turbidity of heated whey proteins has been determined at 500 nm and 25°C, samples were diluted to allow the measurement in the range of 0.1-3 Abs unit (Spectrophotometer Uvikon 810, Kontron Instrument). Values were calculated for the initial protein concentration 3.4%.

The pH of micellisation was considered to be reached upon stability (less than 5% variation of the initial value) of the absorbance measured at 500 nm within an interval of 10 minutes for the same sample as illustrated by the figure 2. For this product the optimal pH for micellisation was 6.0 to 6.2. For this pH adjusted before heat treatment stable turbidity was 21 and residual soluble protein evaluated by absorbance at 280 nm after centrifugation was 1.9%. We can conclude that 45% of initial proteins were transformed in micelles at pH 6.0.

Table 2: Composition of WPI and sample characteristics after micellisation

| Supplier | Davisco |
|---|---|
| Product name | Bipro |
| Batch number | JE 032-1-420 |
| Composition (mg/100 g) | |
| Sodium | 650 |
| Potassium | 44 |
| Chloride*10 if ≤ 40 | 10 |
| Calcium | 82 |
| Phosphorus | 49 |
| Magnesium | 6 |
| Initial pH | 7.2 |
| pH micellisation | 6.0 |
| Turbidity (500 nm)for 3.4% protein in solution | 21 |
| Residual Soluble protein (%) by absorbance at 280 nm | 1.9 |

## Example 3: Microscopic observation of micelles

Production of micelles:

Protein solution was prepared at 2% protein by solvation of whey protein powder (WPI 90 batch 989/2, Lactalis, Retier, France) in MilliQ® water (Millipore), and stirred at 20 °C for 2 h. Then pHs of aliquots were adjusted using HCl 0.1N or NaOH 0.1N.

The solutions were filled in 20 ml glass vials (Agilent Technologies) and sealed with aluminum capsules containing a silicon/PTFE sealing. The solutions were heated at 85°C for 15 min (time to reach the temperature 2.30-2.50 min). After the heat treatment, the samples were cooled in ice water to 20 °C. For this product the optimal pH for micellisation was 7.4.

Microscopic observations:

Liquid micelle samples were encapsulated in agar gel tubes. Fixation was achieved by immersion in a solution of 2.5% glutaraldehyde in 0.1M, pH 7.4 cacodylate buffer and post-fixation with 2% Osmium tetroxide in the same buffer, both solutions containing 0.04% Ruthenium red. After dehydration in a graded ethanol series (70, 80, 90, 96, 100% ethanol), the samples were embedded in Spurr resin (Spurr/ethanol 1:1, 2:1, 100%). After polymerization of the resin (70°C, 48 hours), semi-thin and ultra-thin sections were cut with a Leica ultracut UCT ultra-microtome. Ultra-thin sections, stained with aqueous uranyl-acetate and lead citrate, were examined in transmission electron microscopy (Philips CM12, 80 kV).

TEM micrograph is presented in figure 3. Obtained micelles are presenting a spherical shape with a diameter of 200 nm.

Particle size distribution

The intensity-based size distributions of micelles were measured for those micelles obtained by heat-treatment of a 1 wt % β-lactoglobulin dispersion for 15 min at 85°C at pH 4.25 (positively charged with a zeta potential around +25mV) and at pH 6.0 (negatively charged with a zeta potential around -30mV). Z-averaged hydrodynamic diameter of the micelles was 229.3 mm at pH 4.25 an 227.2 at pH 6.0. β-LG and whey protein aggregations were followed using dynamic light scattering. A Nanosizer ZS apparatus (Malvern Instruments, UK) equipped with a laser emitting at 633 nm and with 4.0 mW power was used. The instrument was used in the backscattering configuration, where detection is done at a scattering angle of 173°. This allows considerable reduction of the multiple scattering signals found in turbid samples. Samples were placed in a squared quartz cell (Hellma, pathlength 1 cm). The path length of the light beam was automatically set by the apparatus, depending on the sample turbidity (attenuation). The autocorrelation function was calculated from the fluctuation of the scattered intensity). The results are presented in figure 6. It shows that the average particle is characterized by a very narrow polydispersity index (<0.200).

**Example 4: Micellisation of a ß-lactoglobulin at a constant pH**

The method described in example 1 was repeated with the proviso of using an aqueous solution of 2 % β-lactoglobulin. The pH of this solution has been adjusted to 7.0 after adding Arginine HCl solutions to obtain a final salt concentration ranging from 5 to 200 mM and a final β-lactoglobulin concentration of 1%. Subsequent heat treatment (80 °C, 10 min, about 2 min heating up) was carried out to produce micelles.

The results are shown in Fig. 4 and clearly indicate that only in the ionic strength range of from about 50 to 70 mM, a substantial turbidity can be observed, indicating the presence of whey protein micelles.

**Example 5: Preparing a whitening agent**

Native whey proteins (WPI 95 batch 848, Lactalis; 8 wt-% aqueous solution) were treated according to example 2. The resulting product lightness (L) was measured in trans-reflectance mode using a MacBeth CE-XTH D65 10° SCE apparatus equipped with a 2 mm measuring cell. The resulting lightness was L = 74.8, that could be compared to the value of L = 74.5 for full-fat milk.

**Example 6: In-situ formation of whey protein micelles**

Material

| Ingredients | Percentages for dry product | Percentages for liquid product |
| --- | --- | --- |
| Instant native whey protein isolate (WPI) | 30-40% | 3-4% |
| Monohydrate sodium dihydrogen phosphate | 5-15% | 0.5-1.5% |
| Coffee powder | 10-20% | 1-2% |
| Sucrose | 35-45% | 3-5% |
| Water | - | 85-95% |

Method for a 3in1 (coffee, sweetener, whitener) coffee dry product

Soluble coffee is dry-mixed with instant WPI powder, sucrose and monohydrate sodium dihydrogen phosphate. This blend is then stored in sealed aluminium packs to ensure constant moisture content. 10 g of this dry mix can be dispersed in 90 g of water in a cup and heated in a microwave for 100 s obtain a whey protein enriched milky coffee.

Method for a liquid product

Soluble coffee is dispersed in water together with instant WPI powder, sucrose and monohydrate sodium dihydrogen phosphate. This liquid blend is then microfiltered and stored at 4°C in polypropylene bottles. 100 mL of this ready to use 3in1 coffee blend are poured in a cup and heated in a microwave for 100 s obtain a whey protein enriched milky coffee.

**Claims**

1. A method for preparing a hot beverage or liquid comestible, the method comprising the following steps:

   - providing a beverage or liquid comestible package wherein contents of the beverage or liquid comestible package comprise native whey protein,
   - heating the content of the package in order to prepare a heated ready-to-eat beverage or liquid comestible and at the same time transforming the native whey protein at least partially into whey protein micelles,

   wherein the content of the package is in the form of a powder to which water is added prior to the heating step, or is in the form of a liquid,
   wherein the heating is carried out during between 0.3 and 3s per ml of product, and
   wherein the solution is heated to a temperature between 80°C and 100°C.

2. The method according to claim 1, wherein the pH of the solution prior to heating is between 5 and 9, preferably between 5 and 8.

3. The method according to any of claims 1 and 2, wherein the native whey protein content in the solution prior to heating is less than 12%, preferably less than 4%.

4. The method according to any of the preceding claims, wherein the heating is carried out during between 0.8 and 1.2s per ml of product.

5. The method according to any of the preceding claims, wherein the package comprises coffee ingredients and the whey protein micelles act as a whitening agent.

6. The method according to any of claims 1 to 5, wherein the package comprises at least one ingredient selected from soup ingredients, sauce ingredients, cocoa ingredients, tea ingredients, plant extract ingredients, sweet dessert ingredients, fats, salts, emulsifiers, sugars, maltodextrins, polysaccharides, cereals, soluble fibres or any combination thereof.

7. The method according to any of the preceding claims, wherein during the heating step the native whey protein is denatured and converted into micelles.

8. The method of claim 7, wherein the yield of conversion of native whey protein into micelles is at least 20%, preferably at least 50% even more preferred more than 80%.

9. The method according to any of the preceding claims, wherein the micelles have an average diameter of 100nm to 900nm.

**Patentansprüche**

1. Verfahren zur Herstellung eines heißen Getränks oder Flüssiglebensmittels, bei dem:

- eine Getränke- oder Flüssiglebensmittel-Packung bereitgestellt wird, wobei Inhaltsstoffe der Getränke- oder Flüssiglebensmittel-Packung natives Molkenprotein umfassen,
- der Inhalt der Packung erwärmt wird, um ein erwärmtes verzehrfertiges Getränk oder Flüssiglebensmittel herzustellen und gleichzeitig das native Molkenprotein zumindest teilweise in Molkenproteinenmizellen umzuwandeln,

wobei der Inhalt der Packung in Form eines Pulvers ist, zu dem vor dem Erwärmungsschritt Wasser zugegeben wird, oder in Form einer Flüssigkeit ist, wobei das Erwärmen für zwischen 0,3 und 3s pro ml Produkt durchgeführt wird, und

wobei die Lösung auf eine Temperatur zwischen 80°C und 100°C erwärmt wird.

2. Verfahren nach Anspruch 1, wobei der pH-Wert der Lösung vor dem Erwärmen zwischen 5 und 9 ist, vorzugsweise zwischen 5 und 8.

3. Verfahren nach einem der Ansprüche 1 und 2, wobei der Gehalt an nativem Molkenprotein in der Lösung vor dem Erwärmen weniger als 12%, vorzugsweise weniger als 4% ist.

4. Verfahren nach einem der vorhergehenden Ansprüche, wobei das Erwärmen für zwischen 0,8 und 1,2s pro ml Produkt durchgeführt wird.

5. Verfahren nach einem der vorhergehenden Ansprüche, wobei die Packung Kaffebestandteile enthält, und die Molkenproteinmizellen als Weißungsmittel wirken.

6. Verfahren nach einem der Ansprüche 1 bis 5, wobei die Packung mindestens einen Bestandteil enthält, der ausgewählt ist aus Suppenbestandteilen, Soßenbestandteilen, Kakaobestandteilen, Teebestandteilen, Pflanzenextrakt-Bestandteilen, süßen Dessertbestandteilen, Fetten, Salzen, Emulgatoren, Zuckern, Maltodextrinen, Polysacchariden, Cerealien, löslichen Ballaststoffen oder jeder Kombination davon.

7. Verfahren nach einem der vorhergehenden Ansprüche, wobei während des Erwärmungsschrittes das native Molkenprotein denaturiert wird und in Mizellen umgewandelt wird.

8. Verfahren nach Anspruch 7, wobei die Ausbeute der Umwandlung von nativem Molkenprotein in Mizellen mindestens 20%, vorzugsweise mindestens 50% und noch bevorzugter mehr als 80% ist.

9. Verfahren nach einem der vorhergehenden Ansprüche, wobei die Mizellen einen mittleren Durchmesser von 100nm bis 900nm haben.

**Revendications**

1. Procédé pour la préparation d'une boisson chaude ou d'un produit alimentaire liquide chaud, le procédé comprenant les étapes suivantes :

- fournir un paquet de boisson ou de produit alimentaire liquide, le contenu du paquet de boisson ou de produit alimentaire liquide comprenant une protéine de lactosérum native,
- chauffer le contenu du paquet de manière à préparer une boisson ou un produit alimentaire liquide prêts à servir chauds et en même temps transformer la protéine de lactosérum native au moins partiellement en des micelles de protéine de lactosérum, dans lequel le contenu du paquet est sous la forme d'une poudre à laquelle est ajoutée de l'eau avant l'étape de chauffage, ou est sous la forme d'un liquide,

dans lequel le chauffage est effectué pendant une durée comprise entre 0,3 et 3 s par ml de produit, et
dans lequel la solution est chauffée à une température comprise entre 80 °C et 100 °C.

2. Le procédé selon la revendication 1, dans lequel le pH de la solution avant le chauffage est compris entre 5 et 9, de préférence entre 5 et 8.

3. Le procédé selon l'une quelconque des revendications 1 et 2, dans lequel la teneur en protéine de lactosérum native dans la solution avant le chauffage est inférieure à 12 %, de préférence inférieur à 4 %.

**4.** Le procédé selon l'une quelconque des revendications précédentes, dans lequel le chauffage est effectué pendant une durée comprise entre 0,8 et 1,2 s par ml de produit.

**5.** Le procédé selon l'une quelconque des revendications précédentes, dans lequel le paquet comprend des ingrédients de café et les micelles de protéine de lactosérum tenant lieu d'agent blanchissant.

**6.** Le procédé selon l'une quelconque des revendications 1 à 5, dans lequel le paquet comprend au moins un ingrédient choisi parmi les ingrédients de soupe, ingrédients de sauce, ingrédients de cacao, ingrédients de thé, ingrédients d'extrait végétal, ingrédients de dessert sucré, matières grasses, sels, émulsifiants, sucres, maltodextrines, polysaccharides, céréales, fibres solubles ou toute combinaison de ceux-ci.

**7.** Le procédé selon l'une quelconque des revendications précédentes, dans lequel, pendant l'étape de chauffage, la protéine de lactosérum native est dénaturée et convertie en micelles.

**8.** Le procédé selon la revendication 7, dans lequel le rendement de conversion de la protéine de lactosérum native en micelles est d'au moins 20 %, de préférence d'au moins 50 %, encore plus préférablement de plus de 80 %.

**9.** Le procédé selon l'une quelconque des revendications précédentes, dans lequel les micelles ont un diamètre moyen de 100 nm à 900 nm.

FIG. 1

EP 1 998 638 B1

Turbidity of Bipro batch JE 032-1-420

FIG. 2

FIG. 3

FIG. 4

FIG. 5

diameter: 229 nm
ζ-potential: +25 mV

diameter: 227 nm
ζ-potential: -30 mV

FIG. 6

Hydrophilic head of protein molecule

Hydrophilic tail of protein molecule

Protein micelle

FIG. 7

FIG. 8

FIG. 9

OM          0.05M          0.1M          0.15M          0.2M

NaCl concentration

FIG. 10

OM          0.05M          0.1M          0.15M          0.2M

NaCl concentration

FIG. 11

Size distribution of a WPM dispersion at
4 wt% protein concentration after
treatment at 85°C for 15 min at pH 5.9

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6767575 B1
- GB 1079604 A
- WO 9307761 A
- US 5750183 A
- WO 9117665 A
- EP 1281322 A
- EP 0603981 A
- US 5882705 A

**Non-patent literature cited in the description**

- **ELOFSSON et al.** *International Dairy Journal,* 1997, 601-608
- **KILARA et al.** *Journal of Agriculture and Food 20 Chemistry,* 1998, 1830-1835
- **BRITTEN M.** Proceedings of the Second International Whey Conference, Chicago. *International Dairy Federation,* October 1991, 189-196
- **ERDMAN.** *Journal of American College of Nutrition,* 1990, 398-409
- *Eur. J. Clin. Invest.,* 2001, vol. 31, 171-178